Europäisches Patentamt

European Patent Office

Office européen des brevets

(11) Publication number: **0 317 153**
**A1**

## (12) EUROPEAN PATENT APPLICATION

(21) Application number: **88310494.5**

(22) Date of filing: **08.11.88**

(51) Int. Cl.⁴: **G02B 3/00**

(30) Priority: **16.11.87 GB 8726768**

(43) Date of publication of application:
**24.05.89 Bulletin 89/21**

(84) Designated Contracting States:
**AT BE CH DE ES FR GB GR IT LI LU NL SE**

(71) Applicant: **BRITISH TELECOMMUNICATIONS public limited company**
**British Telecom Centre, 81 Newgate Street**
**London EC1A 7AJ(GB)**

(72) Inventor: **Mallinson, Stephen Robert**
**25 Andros Close**
**Ipswich Suffolk IP3 0SL(GB)**

(74) Representative: **Greenwood, John David et al**
**British Telecom Intellectual Property Unit**
**151 Gower Street**
**London WC1E 6BA(GB)**

(54) **Microlenses.**

(57) An array of microlenses is formed at the crosspoints (15) of two orthogonal sets of "D-fibre" (10-14; 20-24). Such lens arrays have application, for example, in optical space switches.

Fig.1.

EP 0 317 153 A1

## MICROLENSES

The present invention relates to microlenses, particularly, but not exclusively, for use in optical fibre based communications systems.

Lenses are commonly required in optical systems for such purposes as collimating or focussing light in order to optimise the performance of optical connections, for example. One method of providing a lens to improve the optical coupling between a fibre and another optical component comprises fusing a bead on the end of the fibre. The fused bead then approximates a spherical lens.

However, where a large number of lenses with closely matched properties are required, for example in optical switches, the need for individual fabrication renders such lenses inconvenient. A technique for fabricating lens arrays has been described by Shiono et al in an article entitled "Rectangular-apertured micro-Fresnel lens arrays fabricated by electron-beam lithography", Applied Optics, Vol. 26, No. 3, February 1987. This technique is relatively very complex and requires specialised apparatus to implement.

Another lens array has been described in a United State patent, US 3899778. The patent discloses a multiple lens array which comprises similar halves of plastic substrates carrying parallel corrugations or cylinders on one face. The array halves are oriented with the faces carrying parallel corrugations or cylinders on one face. The array halves are oriented with the faces carrying the corrugations crossed at 90° and brought together to provide a square lenslet at each intersection of the corrugations. A disadvantage of this known lens array, is that it is necessary to use complex machining techniques to form a master mold for an array half. A further disadvantage is that there is very little versatility regarding the size of an array.

It is an object of the present invention to provide a lens assembly which may be simply constructed, which offers versatility in the size of an array and which is especially suitable for forming arrays of lenses with consistent properties.

According to the present invention a lens assembly comprises at least one first length of optical fibre placed substantially orthogonally across, and in optically cooperating proximity with, a plurality of further lengths of optical fibre such that a plurality of lenses are provided at crosspoints between the first and further optical fibres.

The invention arises from the inventor's appreciation that it is possible to form a lens at the intersection between two orthogonal lengths of optical fibre. The major axis of a lens so formed is then mutually orthogonal to both the longitudinal axes of the fibres at the crosspoint. If the fibres are not perfectly orthogonal at the crosspoints, lensing action may still be achieved but, as the angle between the fibres at the crosspoints departs from the perpendicular, the effects of distortion increasingly degrade the lens performance.

Lens assemblies according to the present invention are readily fabricated, and provide a convenient implementation of lens arrays with consistent optical properties.

The invention also offers the advantage of versatility, as it is possible to implement lens assemblies according to the invention in a great variety of configurations, by simply adding or removing fibres from the assembly.

Conveniently, where an array of lenses with parallel axes is required, the further lengths of optical fibre may be coplanar with each other such that the axes of the lenses formed at the crosspoints are parallel. Alternatively, for example, the lens axes may be set at different angles by arranging that the further lengths of optical fibre are not coplanar.

In order for orthogonal fibres to provide useful lensing effects they must be close enough together at the crosspoints. If they are too far apart then, in use, most of the light passing through a first fibre will no longer also pass through an adjacent further fibre, thereby causing inefficient, lossy operation. Preferably, therefore, the fibres are close enough at the crosspoints such that most of the light passing through the first fibre of a lens also passes through the further adjacent fibre. It is to be understood that, as defined in this specification, the fibres are then said to be in optically cooperating proximity according to the invention.

Generally, the fibres forming the lenses will be within a distance of the order of a fibre diameter of one another at the crosspoints. In some embodiments the fibres may actually be in contact at the crosspoints. For a particular lens assembly, where necessary, the preferred separation can be readily determined by experiment.

It is generally desirable to reduce unwanted reflection effects in lens assemblies. To assist in this aim, any gaps which may exist between fibres at the crosspoints may be filled with an appropriate index matching compound. Alternatively or additionally, for example, the fibre surfaces may be provided with a proprietary thin-film anti-reflection coating.

A lens assembly according to the present invention having only one first length of optical fibre will generally provide a linear array of lenses. A two dimensional lens array may be readily formed by adding more lengths of optical fibre parallel to the first length.

Accordingly, for example, a lens assembly comprising N first lengths of optical fibre and M further lengths of optical fibre arranged such that every first length of fibre crosses every further length of optical fibre will provide an NxM array of lenses.

One advantage of the present invention is that techniques for forming optical fibres are well known. It is relatively simple matter to produce lengths of fibre having uniform dimensions and optical properties. Consequently, lens arrays may be produced according to the invention with very consistent and predictable properties.

It is not essential for any of the optical fibres to be formed as a conventional, self-contained waveguide with guiding core and surrounding cladding of differing refractive indices. However, it is necessary that light at a desired operating wavelength can be transmitted through the fibres orthogonally to their longitudinal axes in order for the crosspoint lenses to function.

Preferably the fibres are glass optical fibres.

The optical fibres may be circular in cross-section. Alternatively, for example, the optical fibres may have surfaces which present differing sectional radii of curvature along the axes of the crosspoint lenses thereby allowing the construction of lenses having predetermined, modified optical properties as may be desired. Fibres with non-circular cross sections may be fabricated by appropriately shaping a fibre preform, for example, before drawing the optical fibre as is well-known in the art.

In one embodiment the first length of optical fibre is a plano-cylindrical, so-called "D-fibre" with one convex, cylindrical surface and one planar surface and the further lengths of optical fibre are likewise "D-fibres", the crosspoint lenses being formed by arranging the fibres orthogonally with their planar surfaces face to face. As noted above, the planar surfaces may or may not actually be in contact at the crosspoints.

Lens assemblies according to the invention have especial application, for example, in the construction of optical space switches.

Embodiments of the invention will now be described in detail, by way of example only, with reference to the accompanying drawings in which:

Figure 1 is a perspective view of one configuration of a lens assembly according to the invention;

Figure 2 is a photograph illustrating the focussing action of one of the lenses formed in the Figure 1 configuration;

Figure 3 is a perspective view of an alternative configuration of a lens assembly according to the invention;

Figures 4a and 4b are perspective and plan views respectively of a further alternative embodiment of the present invention;

Figure 5 is a perspective view of a crosspoint between two fibres of different dimension; and

Figures 6 and 7 are cross-sectional views of two types of fibre which may be used in constructing a lens assembly according to the invention.

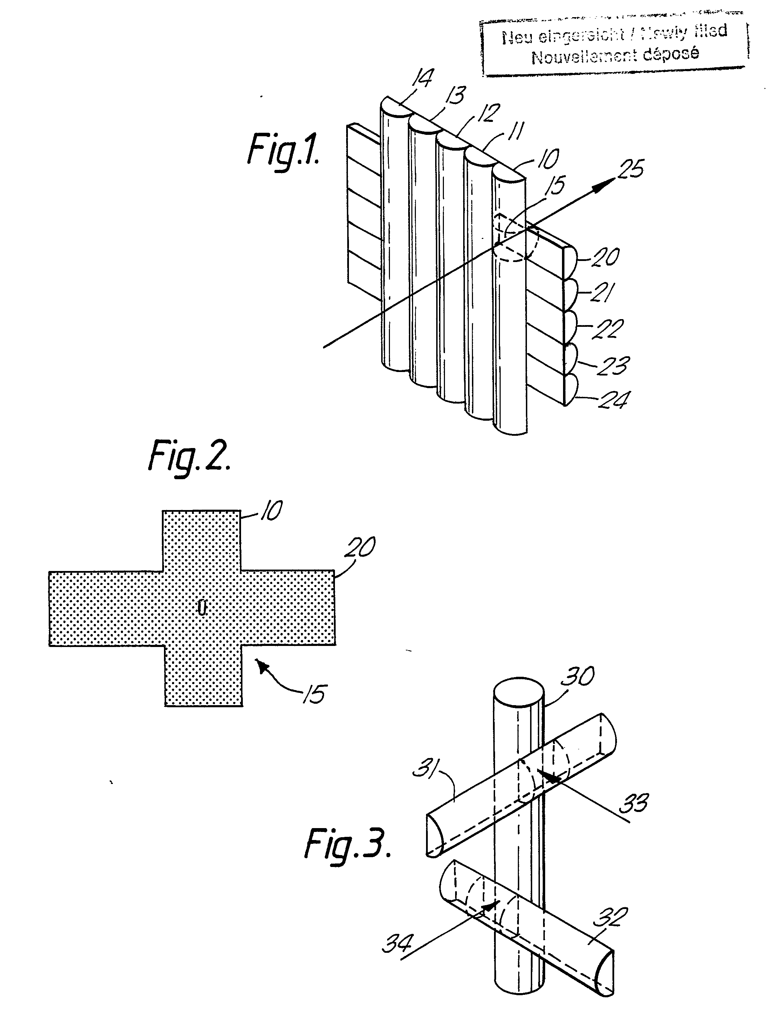

Figure 1 illustrates a lens assembly comprising a set of five plano-cylindrical "D-fibres" 10-14 aligned mutually parallel and orthogonal to a second set of five further plano-cylindrical fibres 20-24 such that the planar surfaces of each set are in abutment. This assembly provides a 5 x 5 array of twenty-five crosspoint lenses. For clarity, only one of these, labelled 15, is indicated at the crosspoint between fibres 10 and 20. The major axis of the lens 15 so formed is shown by the line 25 passing through the crosspoint.

Figure 2 is a photograph of the lens 15 illuminated in the direction illustrated in Figure 1 showing the lensing action at the crosspoint between the fibres 10 and 20.

It is not necessary for all the lens axes in a lens assembly to be in the same direction. Figure 3 illustrates an assembly with two plano-cylindrical fibres 31, 32 each separately arranged orthogonally to one cylindrical fibre 30 thereby forming two lenses with axes 33 and 34 respectively in different directions.

The flexibility of optical fibres themselves also allows considerable freedom in forming lens assemblies according to the present invention in different configurations.

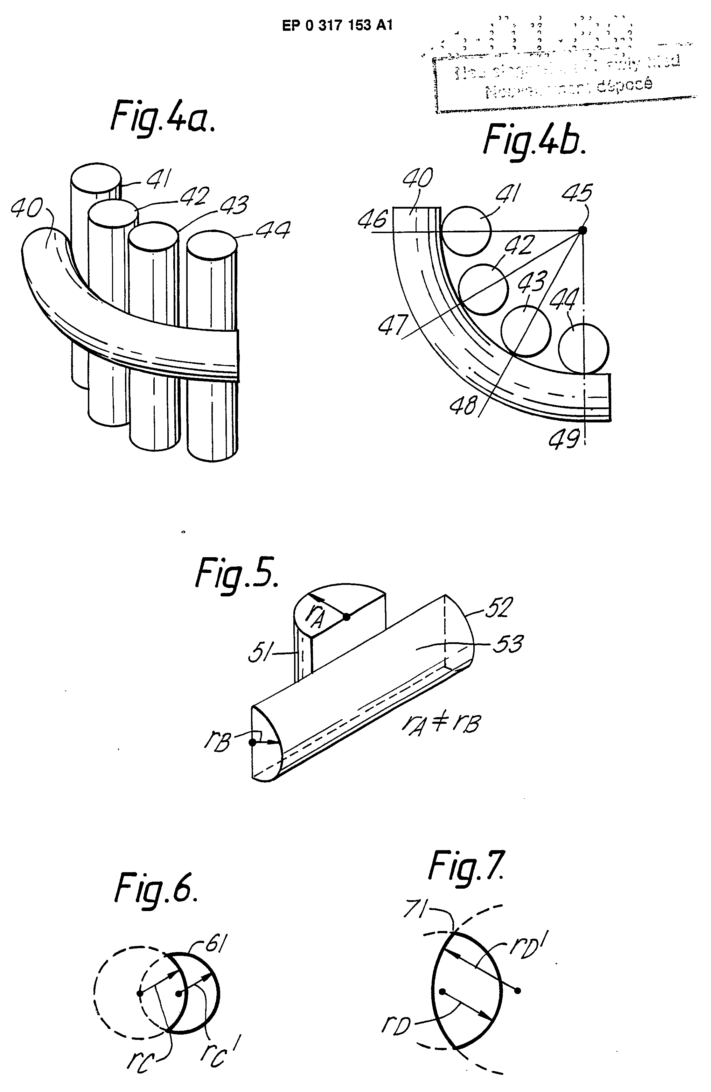

For example, in the embodiment of Figures 4a and 4b a single plano-cylindrical fibre 40 is curved around, and orthogonal to, four further fibres 41-44 to form four lenses with axes 46-49 coincident at a single point 45. Such a configuration might be useful, for example, where a point source is required to feed into several output waveguides. In this instance the point source would then be positioned at the point 45 and the outputs could be via four waveguides suitably arranged on the axes 46-49 on the opposite side of the crosspoint lenses to the point source..

A further advantage of the present invention is the freedom to choose the properties of the crosspoint lenses as desired by appropriately selecting the dimensional and optical characteristics of the fibres forming the crosspoints. For example, the fibres may be chosen to have differing radii of curvature.

Figure 5 illustrates a lens formed at the crosspoint 53 of two plano-cylindrical fibres 51, 52 each with a different cylindrical radius of curvature $r_A$ and $r_B$ respectively.

The optical properties of the fibres may also be altered by doping at manufacture. Doping techniques are well known for forming waveguide cores in optical fibres. These techniques, therefore, may be conveniently adapted to make fibres which present a graded index profile specifically designed to reduce lens aberrations, for example, or to otherwise modify the lens properties of assemblies according to the invention. Other adaptations will be apparent to those skilled in the art.

Fibres useful in constructing a lens assembly according to the invention may have complex cross-sections to allow the properties of crosspoint lenses to be further modified as desired.

Figures 6 and 7 show two example fibre sections. In Figure 6, the fibre 61 is concavo-convex with radii of curvature $r_C$ (concave) and $r_C{}'$ (convex). In Figure 7, the fibre 71 is convex-convex with radii of curvature $r_D$, $r_D{}'$, as shown. It will be recognised that plano-cylindrical fibres also effectively have two radii of curvature, the radius of the planar surface being infinite. These and other fibres with non-circular cross-section may be formed, by appropriate shaping of a fibre preform before drawdown, by techniques known in the art. When a fibre is drawn from a preform the quality of the fibre surface may be very closely controlled and an annealed surface finish of very high quality is readily achieved. There is then no need for especially polished surfaces, for example, as there is with conventional lenses.

Other techniques may also be useful in fabrication of embodiments of the invention. For example, the assembly of Figure 1 may be formed by fixing each set of fibres in an appropriate transparent matrix (with a refractive index less than that of the fibres) and providing the abutting surfaces using methods known for fabricating polished couplers.

It will be appreciated that the present invention allows arrays of juxtaposed but spatially separated collimating lenses of any desired size to be easily and conveniently fabricated. Such arrays have application in, for example, wavelength division multiplexers, demultiplexers, and optical space-switches. Other applications will be apparent to those skilled in the art.

## Claims

1. A lens assembly comprising at least one first length of optical fibre placed substantially orthogonally across, and in optically cooperating proximity with, a plurality of further lengths of optical fibre such that a plurality of lenses are provided at crosspoints between the first and further optical fibres.

2. A lens assembly comprising N first lengths of optical fibre and M further lengths of optical fibre arranged such that every first length of fibre has a lensing crosspoint with every further length of optical fibre thereby to provide an NxM array of lenses.

3. A lens assembly according to claim 1 or 2 wherein the further lengths of optical fibre are substantially coplanar.

4. A lens assembly according to claim 1 or 2 in which a first length of optical fibre is curved in a plane orthogonal to the longitudinal axes of the further fibres at the crosspoints thereby to provide a curved array of lenses.

5. A lens assembly according to any preceding claim comprising at least two lengths of optical fibre with differing cross-sections.

6. A lens assembly according to any preceding claim including a plano-cylindrical optical fibre.

7. A lens assembly according to claim 6 in which all first and further lengths of optical fibre are plano-cylindrical and the planar surfaces of the first and further lengths of optical fibre are face to face.

8. A lens assembly according to any preceding claim including a glass optical fibre.

9. A lens assembly according to any preceding claim including a fibre having a non-uniform refractive index profile.

10. A lens assembly substantially as hereinbefore described and with reference to the accompanying drawings.

**Fig.1.**

14 13 12 11 10 15 25 20 21 22 23 24

**Fig.2.**

10 20 0 15

**Fig.3.**

30 31 33 34 32

## Fig.4a.

40

41
42
43
44

## Fig.4b.

40
46
41
45
42
47
43
44
48
49

## Fig.5.

$r_A$
51
52
53
$r_B$
$r_A \neq r_B$

## Fig.6.

61
$r_C$
$r_{C'}$

## Fig.7.

71
$r_{D'}$
$r_D$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 184 748  (H. KUGLER et al.) <br> * Figures 1,3; claims * | 1 | G 02 B    3/00 |
| A,D | US-A-3 899 778  (D. ROBERTS) <br> * Figures 1-6; claims * | 1-3 | |
| A | DE-A-2 951 207  (CANON K.K.) <br> * Figures 1-5; claims * | 1-3 | |

TECHNICAL FIELDS SEARCHED (Int. Cl.4)

G 02 B    3/00
H 04 Q    3/00

The present search report has been drawn up for all claims

| Place of search | Date of completion of the search | Examiner |
|---|---|---|
| THE HAGUE | 13-12-1989 | WESBY P.B. |